# EUROPÄISCHE PATENTSCHRIFT

(11) **EP 2 598 383 B1**
(45) Veröffentlichungstag und Bekanntmachung des Hinweises auf die Patenterteilung: **20.01.2016**
(21) Anmeldenummer: 11725376.5
(22) Anmeldetag: 31.05.2011
(51) Int. Cl.: B60S 1/26, B60S 1/24

(54) **WISCHERVORRICHTUNG**
WIPER DEVICE
DISPOSITIF D'ESSUIE-GLACE

(30) Priorität: 29.07.2010 DE 102010038595
(43) Veröffentlichungstag der Anmeldung: 05.06.2013
(73) Patentinhaber: Robert Bosch GmbH, 70442 Stuttgart (DE)
(72) Erfinder: TRENKLE, Lothar, 77833 Ottersweier (DE)
(86) Internationale Anmeldenummer: PCT/EP2011/058890
(87) Internationale Veröffentlichungsnummer: WO 2012/013395

(56) Entgegenhaltungen:
- WO-A1-02/06096
- WO-A1-2010/108645
- DE-A1- 3 237 269
- DE-A1- 10 261 926
- DE-A1- 10 359 968
- GB-A- 851 276

## Beschreibung

Die Erfindung betrifft eine Wischervorrichtung mit den Merkmalen des Oberbegriffs von Anspruch 1.

### Stand der Technik

Wischervorrichtungen werden beispielsweise an Kraftfahrzeugen verwendet, um ein Wischerblatt über eine Sichtscheibe zu führen und diese von Verunreinigungen und Feuchtigkeit zu befreien. Das Wischerblatt wird dabei von einem Wischerarm angetrieben, der um eine Wischerwelle hin und her schwenkt. Zum oszillierenden Antrieb der Wischerwelle ist eine Vielzahl unterschiedlicher Vorrichtungen bekannt, die sich unter anderem in Komplexität und Bauraumanforderungen unterscheiden.

Die DE 103 59 968 A1, GB 851 276 A, DE 102 61 926 A, DE 323 72 69 A, und die WO 02 06096 A1 weisen Merkmal nach art der Gattung der vorliegenden Erfindung auf. Die WO 2010 108 645 ist als Stand der Technik gemäß Art. 54(3) EPÜ genannt.

In einer üblichen Ausführungsform ist ein Elektromotor mittels eines Koppelgetriebes mit der Wischerwelle verbunden. Eine mit der Abtriebswelle des Elektromotors verbundene erste Kurbel wirkt über eine Schubstange auf eine mit der Wischerwelle verbundene zweite Kurbel, so dass die Drehbewegung der Abtriebswelle des Elektromotors in die oszillierende Bewegung der Wischerwelle umgesetzt wird. Es kann eine weitere Wischerwelle für einen weiteren Wischerarm vorgesehen sein, die mittels eines weiteren Koppelgetriebes durch die Wischerwelle angetrieben wird. Dabei können die Kurbeln beider Koppelgetriebe an der Wischer- oder Abtriebswelle zusammen fallen. In einer Ausführungsform ist der Elektromotor im Bereich der weiteren Wischerwelle angeordnet, so dass das Koppelgetriebe die Bewegung zunächst zur weiter entfernten Wischerwelle überträgt und das weitere Koppelgetriebes von dort aus zur weniger weit entfernten weiteren Wischerwelle.

Dabei besteht der Nachteil, dass ein erforderlicher Einbauraum der Wischervorrichtung in ein Kraftfahrzeug eine optimale Positionierung der Wischerwellen bezüglich der Sichtscheibe in Frage stellt. Insbesondere kann bei Einsatz der Wischervorrichtung im Bereich einer Frontscheibe des Kraftfahrzeugs ein Abstand der Wischerwelle oder der weiteren Wischerwelle zur seitlichen Begrenzung der Frontscheibe (A-Säulen) bauraumbedingt relativ groß sein, so dass ein Wischbereich eines Wischers, der mittels eines Wischerarms mit der Wischerwelle verbunden ist, in Größe und/oder Lage nicht optimal ist. Der Erfindung liegt daher die Aufgabe zugrunde, eine Wischervorrichtung anzugeben, die ein verringertes Einbaumaß aufweist.

Die Aufgabe wird gelöst durch eine Wischervorrichtung mit den Merkmalen des Anspruchs 1. Unteransprüche geben bevorzugte Ausführungsformen wieder.

Eine erfindungsgemäße Wischervorrichtung zum Einsatz in einem Kraftfahrzeug umfasst eine Wischerwelle zum oszillierenden Antrieb eines Wischerarms, einen reversierbaren Antriebsmotor und eine Übertragungseinrichtung zur Übertragung der Bewegung des Antriebsmotors auf die Wischerwelle. Die Übertragungseinrichtung weist ein auf der Wischerwelle angebrachtes Zahnsegment auf, in dem ein am Antriebsmotor angebrachtes Zahnrad oder weiteres Zahnsegment kämmt. Die Wischervorrichtung weist eine weitere Wischerwelle zum oszillierenden Antrieb eines weiteren Wischerarms auf, wobei die Wischerwellen mittels eines Koppelgetriebes miteinander verbunden sind. Durch ein einfaches, zuverlässiges und erprobtes Koppelgetriebe wird die Wischervorrichtung zum Antrieb zweier Wischer verwendet, wie es an einem üblichen Kraftfahrzeug erforderlich ist. Eine gleichsinnige bzw. gegensinnige Betätigung der Wischerwelle und der weiteren Wischerwelle kann durch geeignete Wahl von Befestigungspunkten des Koppelgetriebes erzielt werden.

Dadurch kann auf einer dem Antriebsmotor abgewandten Seite der Wischerwelle erforderlicher Bauraum der Wischervorrichtung minimiert sein. Dementsprechend kann die Wischerwelle im Sinne eines optimalen Wischergebnisses eines mittels eines Wischerarms mit der Wischerwelle verbundenen Wischers verbessert positionierbar sein.

Bevorzugterweise ist die Wischerwelle im Bereich einer Fahrerseite des Kraftfahrzeugs angebracht. Dadurch kann eine Ausfallsicherheit eines fahrerseitigen Wischers erhöht sein. Ferner können sich dadurch Vorteile bei der Verbindung des Antriebsmotors mit einem elektrischen Steuer und Versorgungssystem des Kraftfahrzeugs ergeben.

Auf dem Zahnrad oder dem weiteren Zahnsegment kann ein Antriebselement des Koppelgetriebes angeordnet sein. Dadurch kann eine gegenläufige Ansteuerung der weiteren Wischerwelle bezüglich der Wischerwelle erzielt werden, ohne zusätzlichen Bauraum auf einer Seite der Wischerwelle bzw. der weiteren Wischerwelle zu erfordern, die vom Antriebsmotor abgewandt ist.

Das Zahnsegment kann einen größeren wirksamen Radius als das in ihm kämmende Zahnrad oder weitere Zahnsegment aufweisen. Dadurch kann eine Untersetzungsfunktionalität gegeben sein, so dass ein schnell drehender Antriebsmotor mit einem niedrigen Drehmoment an die Anforderungen der Wischereinrichtung angepasst werden kann.

Die Verzahnung des Zahnsegments bezüglich der Wischerwelle kann einen Winkel einschließen, der weniger als ca. 90° beträgt. Dadurch kann vermieden werden, dass ein Abschnitt des Zahnsegments während des Betriebs der Wischervorrichtung auf eine dem Antriebsmotor abgewandte Seite der Wischerwelle gelangt. Dadurch kann weiterer Bauraum eingespart und eine optimierte Positionierbarkeit der Wischerwelle erhöht sein.

Der Antriebsmotor kann ein Untersetzungsgetriebe umfassen. Dadurch kann ein verkleinerter Antriebsmotor eingesetzt werden, so dass der erforderliche Bauraum der Wischervorrichtung weiter minimiert sein kann. Das Untersetzungsgetriebe kann selbsthemmend sein.

Es kann ein Befestigungselement zur Lagerung des Antriebsmotors und der Wischerwelle vorgesehen sein, wobei ein Abstand des Antriebsmotors zur Wischerwelle veränderlich sein kann. Dadurch kann ein Spiel zwischen den Verzahnungen des Zahnsegments und des Zahnrads bzw. weiteren Zahnsegments einstellbar sein. Ein mittels eines Wischerarms mit der Wischerwelle verbundenen Wischers kann dadurch präziser positionierbar sein.

Die Erfindung wird nun mit Bezug auf die beigefügten Figuren genauer beschrieben, in denen:
- Figur 1: eine Wischereinrichtung; und
- Figur 2: eine Detailansicht der Wischereinrichtung aus Fig. 1
darstellt.

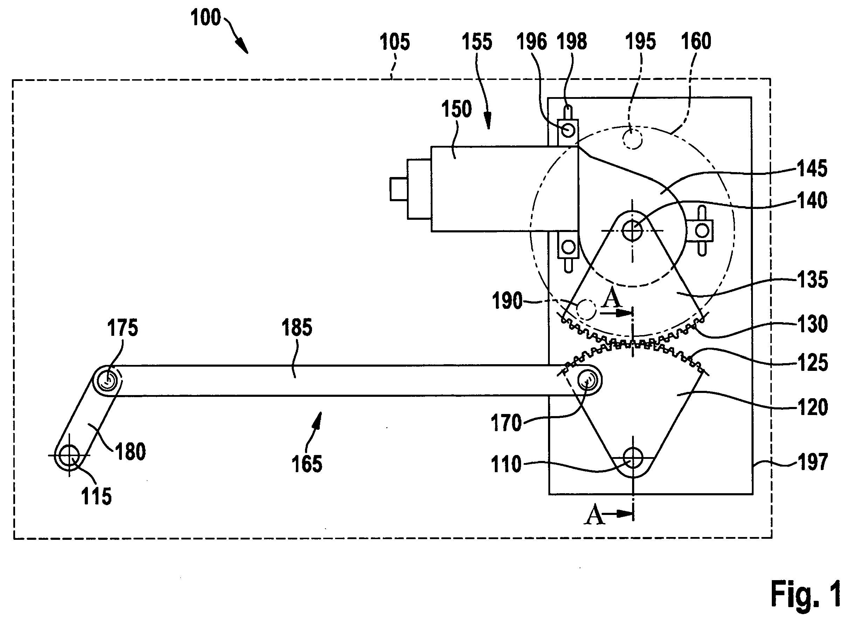

Figur 1 zeigt eine Wischereinrichtung 100 im Einsatz an einem Kraftfahrzeug 105. Die Wischereinrichtung 100 umfasst eine erste Wischerwelle 110 und eine zweite Wischerwelle 115. Ohne Beschränkung der Allgemeinheit seien die erste Wischerwelle 110 im Bereich einer Fahrerseite und die zweite Wischerwelle 115 im Bereich einer Beifahrerseite des Kraftfahrzeugs 105 angeordnet.

Mit der ersten Wischerwelle 110 ist ein Zahnsegment 120 drehmomentschlüssig verbunden. Das Zahnsegment 120 hat einen Öffnungswinkel von ca. 90° und trägt in seinem raidalen Außenbereich eine Verzahnung 125. Die Verzahnung 125 kämmt mit einer Verzahnung 130 eines weiteren Zahnsegments 135, das drehmomentschlüssig mit einer Abtriebswelle 140 eines Untersetzungsgetriebes 145 verbunden ist. Das Untersetzungsgetriebe 145 ist beispielsweise ein selbsthemmendes Schneckengetriebe, wird von einem Elektromotor 150 angetrieben und bildet mit diesem einen Antriebsmotor 155.

Durch entsprechende elektrische Ansteuerung des Elektromotors 150, im Falle eines Gleichstrommotors beispielsweise durch geeignetes Ändern der Polarität, kann die Abtriebswelle 140 im Uhrzeigersinn und gegen den Uhrzeigersinn gedreht werden, so dass eine oszillierende Drehung der Abtriebswelle entsteht. In der dargestellten Ausführungsform ist das weitere Zahnsegment 135 so bemessen, dass die Länge der Verzahnung 130 entlang eines Kreisbogens um die Abtriebswelle 140 annähernd der Länge der Verzahnung 120 entlang des Kreisbogens um die erste Wischerwelle 110 entspricht. Dies ist insbesondere dann sinnvoll, wenn die beiden Zahnsegmente 120 und 135 gleiche wirksame Radien aufweisen, also der Abstand der Verzahnung 130 von der Drehachse der Abtriebswelle 140 dem Abstand der Verzahnung 125 von der Drehachse der Wischerwelle 110 entspricht.

Ist der wirksame Radius des weiteren Zahnsegments 135 kleiner als der des Zahnsegments 120, so ist üblicherweise ein Öffnungswinkel, den die Verzahnung 130 des weiteren Zahnsegments 135 bezüglich der Abtriebswelle 140 einschließt, größer als der korrespondierende Öffnungswinkel des Zahnsegments 120. In einer Ausführungsform beträgt der Öffnungswinkel des weiteren Zahnsegments 135 360°, so dass zutreffender von einem Zahnrad 160 zu sprechen ist, welches gestrichelt eingezeichnet ist.

Ein Koppelgetriebe 165 überträgt die Bewegung der ersten Wischerwelle 110 auf die zweite Wischerwelle 115. Hierfür umfasst das Koppelgetriebe 165 einen ersten Kugelbolzen 170, der an dem Zahnsegment 120 angebracht ist, einen zweiten Kugelbolzen 175, der an einem drehmomentschlüssig mit der zweiten Wischerwelle 115 verbundenen Kurbelarm 180 angebracht ist, und eine Schubstange 185, welche den ersten Kugelbolzen 170 mit dem zweiten Kugelbolzen 175 zug- und schubstabil verbindet.

In der gezeigten Ausführungsform werden die erste Wischerwelle 110 und die zweite Wischerwelle 115 gleichsinnig angesteuert, d.h. dass die Drehrichtungen der Wischerwellen 110, 115 im Betrieb der Wischeinrichtung 100 in die gleiche Richtung weisen.

In einer anderen Ausführungsform kann der erste Kugelbolzen 170 auch an der gestrichelt dargestellten ersten alternativen Position 190 an dem weiteren Zahnsegment 135 bzw. dem Zahnrad 160 angebracht sein. Die erste alternative Position 190 befindet sich in vertikaler Richtung in Figur 1 zwischen der Verzahnung 125 des Zahnsegments 120 und der Abtriebswelle 140, wodurch die Gleichsinnigkeit der Betätigung der Wischerwellen 110 und 115 erhalten bleibt.

In noch einer weiteren Ausführungsform ist der erste Kugelbolzen 170 in einer zweiten alternativen Position 195 an dem weiteren Zahnsegment 135 bzw. dem Zahnrad 160 angeordnet. Die zweite alternative Position 195 befindet sich in vertikaler Richtung in Figur 1 auf einer der Verzahnung 130 des Zahnsegments 120 abgewandten Seite der Abtriebswelle 140. Dadurch wird die zweite Wischerwelle 115 gleichsinnig mit der Abtriebswelle 140 betätigt. Da die Abtriebswelle 140 wegen der ineinander kämmenden Verzahnungen 125 und 130 stets gegenläufig zur ersten Wischerwelle 110 ist, sind auch die erste Wischerwelle 110 und die zweite Wischerwelle 115 gegenläufig betätigt. Im Fall des weiteren Zahnsegments 135 kann zur Lagerung des ersten Kugelbolzens 170 in der zweiten alternativen Position 195 ein entsprechender Fortsatz (Sporn) zwischen der zweiten alternativen Position 195 und dem Zahnsegment 125 ausgebildet sein.

In einer weiteren, nicht dargestellten Ausführungsform können noch weitere Wischerwellen entsprechend der Wischerwellen 110 und 115 vorgesehen sein, die über weitere Koppelgetriebe entsprechend dem Koppelgetriebe 165 angesteuert sein können.

Der Elektromotor 150 ist mittels Bolzen 196 an einer Montageplatte 197 befestigt, wobei die Bolzen 196 in Langlöchern 198 aufgenommen sind, die parallel zu einer Verbindungslinie zwischen der Abtriebswelle 140 und der Wischerwelle 110 verlaufen. In anderen Ausführungsformen können die Langlöcher 198 auch schräg zu dieser Verbindungslinie verlaufen.

Durch Verschieben der Bolzen 196 in den Langlöchern 198 kann ein Abstand zwischen der Abtriebswelle 140 und der ersten Wischerwelle 110 verstellt werden. Dadurch verändert sich ein Spiel zwischen der Verzahnung 125 des Zahnsegments und der Verzahnung 130 des weiteren Zahnsegments 135 bzw. des Zahnrads 160. Durch Verringern des Abstandes zwischen der Abtriebswelle 140 und der ersten Wischerwelle 110 kann das Spiel zwischen den Verzahnungen 125 und 130 bis auf Null reduzierbar sein, so dass eine sehr präzise Ansteuerung der ersten Wischwelle durch den Antriebsmotor 155 erzielbar ist. Nach dem Verschieben wird der Elektromotor mittels der Bolzen 198 mit Klemmsitz an der Montageplatte 196 fixiert. In einer weiteren Ausführungsform ist auch die zweite Wischerwelle 115 an der Montageplatte 196 befestigt, so dass sich eine separat handhabbare Einheit ergibt.

Die Wischereinrichtung 100 ist vorzugsweise so ausgelegt, dass unterhalb einer Verbindungslinie zwischen den beiden Wischerwellen 110 und 115 - abgesehen von den Wischerwellen 110 und 115 selbst und deren Lagerung - kein weiterer Einbauraum erforderlich ist. Bei entsprechender Dimensionierung bzw. Anordnung der dargestellten Elemente kann auch der Bauraum rechts von der ersten Wischerwelle 110 und/oder links von der zweiten Wischerwelle 115 minimiert sein. Dadurch können die Wischerwellen 110 und 115 im Kraftfahrzeug 105 nahe an Begrenzungen verbaut werden. Diese Begrenzungen können insbesondere diejenigen einer Sichtscheibe sein, die mittels Wischblättern und mit den Wischerwellen 110, 115 verbundenen Wischerarmen durch die Wischereinrichtung 100 zu reinigen ist. Die Begrenzungen können ferner von einer Einfassung der Sichtscheibe stammen, beispielsweise von so genannten A-Säulen des Kraftfahrzeugs 105.

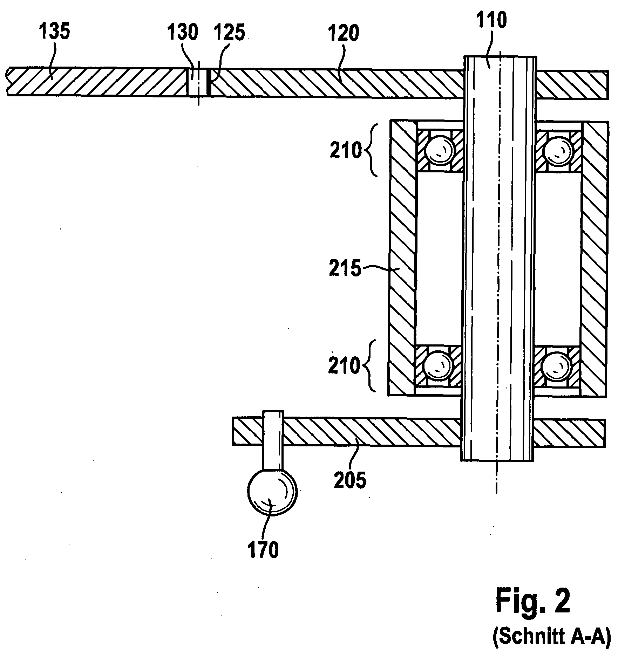

Figur 2 zeigt eine Schnittansicht eines Teils der Wischereinrichtung 100 aus Figur 1 in einer weiteren Ausführungsform. Die Blickrichtung ist als Schnitt A-A in Figur 1 angegeben.

Die Wischerwelle 110 ist an ihrem oberen Ende mit dem Zahnsegment 120 verbunden. An ihrem unteren Ende trägt die Wischerwelle 110 einen Kurbelarm 205, an dem der erste Kugelbolzen 170 nach unten weisend befestigt ist. Eine nach oben weisende Befestigung ist ebenfalls möglich. Zwischen dem Zahnsegment 120 und dem Kurbelarm 205 ist die Wischerwelle 110 mittels zweier Wälzlager 210 drehbar an einem Wischerlagergehäuse 215 befestigt. Das Wischerlagergehäuse ist üblicherweise im unteren Bereich der Sichtscheibe befestigt.

Auch in dieser Ausführungsform verläuft die Drehbewegung der zweiten Wischerwelle 115 gleichsinnig zur ersten Wischerwelle 110.

## Patentansprüche

1. Wischervorrichtung (100) zum Einsatz in einem Kraftfahrzeug (105), umfassend:
- eine Wischerwelle (110) zum oszillierenden Antrieb eines Wischerarms;
- einen reversierbaren Antriebsmotor (155);
- eine Übertragungseinrichtung zur Übertragung der Bewegung des Antriebsmotors (155) auf die Wischerwelle (110),
**dadurch gekennzeichnet, dass**
- die Übertragungseinrichtung ein auf der Wischerwelle (110) angebrachtes Zahnsegment (120) aufweist, in dem ein am Antriebsmotor (155) angebrachtes Zahnrad (160) oder weiteres Zahnsegment (135) kämmt, und dass die Wischervorrichtung eine weitere Wischerwelle (115) zum oszillierenden Antrieb eines weiteren Wischerarms aufweist, wobei die Wischerwellen (110, 115) mittels eines Koppelgetriebes (165) miteinander verbunden sind.

2. Wischervorrichtung (100) nach Anspruch 1, **dadurch gekennzeichnet, dass** die Wischerwelle (110) im Bereich einer Fahrerseite des Kraftfahrzeugs (105) angebracht ist.

3. Wischervorrichtung (100) nach einem der Ansprüche 1 bis 2, **dadurch gekennzeichnet, dass** auf dem Zahnrad (160) oder weiteren Zahnsegment (135) ein Antriebselement (170) des Koppelgetriebes (165) angeordnet ist.

4. Wischervorrichtung (100) nach einem der vorangehenden Ansprüche, **dadurch gekennzeichnet, dass** das Zahnsegment (120) einen größeren wirksamen Radius als das in ihm kämmende Zahnrad (160) oder weitere Zahnsegment (135) aufweist.

5. Wischervorrichtung (100) nach einem der vorangehenden Ansprüche, **dadurch gekennzeichnet, dass** die Verzahnung (125) des Zahnsegments (120) bezüglich der Wischerwelle einen Winkel einschließt, der weniger als ca. 90° beträgt.

6. Wischervorrichtung nach (100) einem der vorangehenden Ansprüche, **dadurch gekennzeichnet, dass** der Antriebsmotor (155) ein Untersetzungsgetriebe (145) umfasst.

7. Wischervorrichtung (100) nach einem der vorangehenden Ansprüche, **gekennzeichnet durch** ein Befestigungselement (197) zur Lagerung des Antriebsmotors (155) und der Wischerwelle (110), wobei ein Abstand des Antriebsmotors (155) zur Wischerwelle (110) veränderlich ist.

## Claims

1. Wiper device (100) for use in a motor vehicle (105), comprising:
- a wiper shaft (110) for the oscillating drive of a wiper arm;
- a reversible driving motor (155);
- a transmission device for transmitting the movement of the driving motor (155) to the wiper shaft (110),
**characterized in that**
- the transmission device has a toothed segment (120) which is fitted on the wiper shaft (110) and in which a gearwheel (160), which is fitted on the driving motor (155), or a further toothed segment (135) meshes, and **in that** the wiper device has a further wiper shaft (115) for the oscillating drive of a further wiper arm, wherein the wiper shafts (110, 115) are connected to each other by means of a coupling mechanism (165).

2. Wiper device (100) according to Claim 1, **characterized in that** the wiper shaft (110) is fitted in the region of a driver's side of the motor vehicle (105).

3. Wiper device (100) according to either of Claims 1 and 2, **characterized in that** a driving element (170) of the coupling mechanism (165) is arranged on the gearwheel (160) or further toothed segment (135).

4. Wiper device (100) according to one of the preceding claims, **characterized in that** the toothed segment (120) has a greater effective radius than the gearwheel (160) or further toothed segment (135) meshing therein.

5. Wiper device (100) according to one of the preceding claims, **characterized in that** the toothing (125) of the toothed segment (120) encloses an angle which is less than approx. 90° with respect to the wiper shaft.

6. Wiper device (100) according to one of the preceding claims, **characterized in that** the driving motor (155) comprises a step-down gear (145).

7. Wiper device (100) according to one of the preceding claims, **characterized by** a fastening element (197) for the mounting of the driving motor (155) and of the wiper shaft (110), wherein a distance of the driving motor (155) to the wiper shaft (110) is variable.

## Revendications

1. Dispositif d'essuie-glace (100) pour l'utilisation dans un véhicule automobile (105), comprenant :
- un arbre d'essuie-glace (110) pour l'entraînement oscillant d'un bras d'essuie-glace ;
- un moteur d'entraînement réversible (155) ;
- un dispositif de transmission pour transmettre le mouvement du moteur d'entraînement (155) à l'arbre d'essuie-glace (110),
**caractérisé en ce que**
- le dispositif de transmission présente un segment denté (120) monté sur l'arbre d'essuie-glace (110), dans lequel s'engrène une roue dentée (160) montée sur le moteur d'entraînement (155), ou un segment denté supplémentaire (135), et **en ce que** le dispositif d'essuie-glace présente un arbre d'essuie-glace supplémentaire (115) pour l'entraînement oscillant d'un bras d'essuie-glace supplémentaire, les arbres d'essuie-glace (110, 115) étant connectés l'un à l'autre au moyen d'une transmission de couplage (165).

2. Dispositif d'essuie-glace (100) selon la revendication 1, **caractérisé en ce que** l'arbre d'essuie-glace (110) est monté dans la région d'un côté conducteur du véhicule automobile (105).

3. Dispositif d'essuie-glace (100) selon l'une quelconque des revendications 1 à 2, **caractérisé en ce qu'**un élément d'entraînement (170) de la transmission de couplage (165) est disposé sur la roue dentée (160) ou sur le segment denté supplémentaire (135).

4. Dispositif d'essuie-glace (100) selon l'une quelconque des revendications précédentes, **caractérisé en ce que** le segment denté (120) présente un plus grand rayon actif que la roue dentée (160) ou le segment denté supplémentaire (135) s'engrenant dans celui-ci.

5. Dispositif d'essuie-glace (100) selon l'une quelconque des revendications précédentes, **caractérisé en ce que** la denture (125) du segment denté (120) forme avec l'arbre d'essuie-glace un angle inférieur à environ 90°.

6. Dispositif d'essuie-glace (100) selon l'une quelconque des revendications précédentes, **caractérisé en ce que** le moteur d'entraînement (155) présente un réducteur (145).

7. Dispositif d'essuie-glace (100) selon l'une quelconque des revendications précédentes, **caractérisé par** un élément de fixation (197) pour le support du moteur d'entraînement (155) et de l'arbre d'essuie-glace (110), la distance entre le moteur d'entraînement (155) et l'arbre d'essuie-glace (110) étant variable.
